# EUROPEAN PATENT APPLICATION

(11) **EP 4 406 689 A1**
(43) Date of publication of application: **31.07.2024**
(21) Application number: 23208602.5
(22) Date of filing: 08.11.2023
(51) Int. Cl.: B23K 26/20, H01M 50/103, H01M 50/169, H01M 50/119, B23K 103/10

(54) **POWER STORAGE DEVICE MANUFACTURING METHOD AND POWER STORAGE DEVICE**

(30) Priority: 24.01.2023 JP 2023008511
(71) Applicant: Prime Planet Energy & Solutions, Inc., Chuo-ku Tokyo 103-0022 (JP)
(72) Inventor: HARA, Yuki, Tokyo, 103-0022 (JP); TAMURA, Kazuki, Tokyo, 103-0022 (JP)
(74) Representative: Kuhnen & Wacker Patent- und Rechtsanwaltsbüro PartG mbB

(57) **Abstract**

A manufacturing method of a power storage device disclosed herein includes: a preparing step of preparing a bottomed case main body , a sealing plate , and an electrode body; an assembling step of housing the electrode body inside the case main body, attaching the sealing plate to the opening of the case main body, and assembling the power storage device; and a welding step of radiating laser light to a boundary between the case main body and the sealing plate from a side of an outer surface of the sealing plate, and performing laser welding on the case main body and the sealing plate. A light absorptivity of a laser used in the welding step is higher in at least part of an area in which an opening periphery part of the case main body and the sealing plate face each other than at other portions.

## Description

### BACKGROUND OF THE DISCLOSURE

### 1. Field

The present disclosure relates to a power storage device manufacturing method and a power storage device. 2. Background

Conventionally, there has been known a power storage device that includes an electrode body, a case main body that houses the electrode body, and a sealing plate that seals an opening of the case main body. The above case main body and sealing body are welded by, for example, laser welding, and sealed. For example, JP 2018-202478 A discloses a laser sealing device for such a power storage device.

### SUMMARY

When a power storage device is manufactured, a case main body and a sealing plate are usually made separately and prepared. Hence, each part has a dimensional tolerance, and this dimensional tolerance may produce a slight gap between the case main body and the sealing plate. When laser light is radiated in a welding process in a state where such a gap is produced, the laser light may directly enter inside a case through the gap, that is, so-called "laser pass" may occur. Even if the angle of the laser light is adjusted, the laser light may be reflected in the gap between the case main body and the sealing plate, and enter inside the case. Alternatively, relative positions of a laser radiation device and the case, that is, a radiation angle of the laser light with respect to a laser light radiation position may change due to workpiece attachment and fixing error per manufactured individual product, too. Therefore, the appropriate radiation angle of the laser light changes per manufactured individual product, and it is very difficult to adjust the radiation angle thereof every time. When relationships of relative positions and postures between the case and the laser light are not appropriate, and when the laser light unintentionally enters inside the case, a housed object inside the case (e.g., an electrode body housed in the case) tends be damaged, which is not preferable. Furthermore, even when the gap is crushed by a clamp or the like, a gap tends be produced depending on a combination of the case main body and the sealing plate. Even if, for example, a gap at a portion is eliminated, there are gaps at other portions, and it is difficult to eliminate the gaps at all welding portions. Hence, there has been still a room for improvement from a viewpoint of manufacturing a power storage device having higher safety.

The present disclosure has been made in light of this point, and an object of the present disclosure is to provide a manufacturing method of a secondary battery that prevents laser light from entering inside a battery case and has higher safety.

A manufacturing method disclosed herein includes: a preparing step of preparing a bottomed case main body whose one side surface is opened, a sealing plate that seals the opening, and an electrode body that includes a positive electrode and a negative electrode; an assembling step of housing the electrode body inside the case main body, attaching the sealing plate to the opening of the case main body, and assembling a power storage device; and a welding step of radiating laser light to a boundary between the case main body and the sealing plate from a side of an outer surface of the sealing plate, and performing laser welding on the case main body and the sealing plate. According to the manufacturing method described herein, a light absorptivity of a laser used in the welding step is higher in at least part of an area in which an opening periphery part of the case main body and the sealing plate face each other than at an other portion.

According to this configuration, it is possible to prevent laser light from being suitably absorbed in the welding step, and prevent the laser light from entering inside a case through slight gaps between the case main body and the sealing plate. Consequently, it is possible to provide the power storage device of improved safety.

### BRIEF DESCRIPTION OF THE DRAWINGS

FIG. 1 is a perspective view schematically illustrating a battery according to an embodiment;
FIG. 2 is a view schematically illustrating an internal structure of the battery according to the embodiment;
FIG. 3 is a view schematically illustrating a configuration of an electrode body;
FIG. 4 is a plan view of FIG. 1;
FIG. 5 is a schematic longitudinal cross-sectional view taken alone line V-V in FIG. 3;
FIG. 6 is a flowchart for describing a power storage manufacturing method according to the embodiment;
FIG. 7 is a view schematically illustrating how an assembling process is performed;
FIG. 8 is a view schematically illustrating how a welding process is performed; and
Fig. 9 is a view according to a modified example corresponding to FIG. 8.

### DETAILED DESCRIPTION OF THE PREFERRED EMBODIMENTS

Hereinafter, an embodiment of a technique disclosed herein will be described with reference to the drawings. Note that matters that are other than matters mentioned in particular in this description and are necessary to carry out the technique disclosed herein (e.g., a general configuration, a manufacturing process, and the like of a power storage device that do not characterize the technique disclosed herein) can be grasped as design matters of one of ordinary skilled in the art based on the conventional technique in the field of the present disclosure. The technique disclosed herein can be carried out based on contents disclosed in this description, and a technical common knowledge in the field of the present disclosure. Note that each drawing is schematically drawn, and a dimensional relationship (the lengths, the widths, the thicknesses, and the like) does not necessarily reflect an actual dimensional relationship. Furthermore, members and parts that exhibit the same functions in the drawings described below will be assigned the same reference numerals, and redundant description will be omitted or simplified.

In this description, the "power storage device" refers to a device that causes a charging/discharging reaction when charge carriers move between a pair of electrodes (a positive electrode and a negative electrode) via electrolytes. The power storage device may include secondary batteries such as a lithium ion secondary battery, a nickel hydrogen battery, and a nickel-cadmium battery; and capacitors (physical batteries) such as a lithium ion capacitor and an electric double layer capacitor.

Hereinafter, the lithium ion secondary battery will be exemplified and described as a preferable embodiment of the power storage device disclosed herein, which does not intend to limit an application target to the battery.

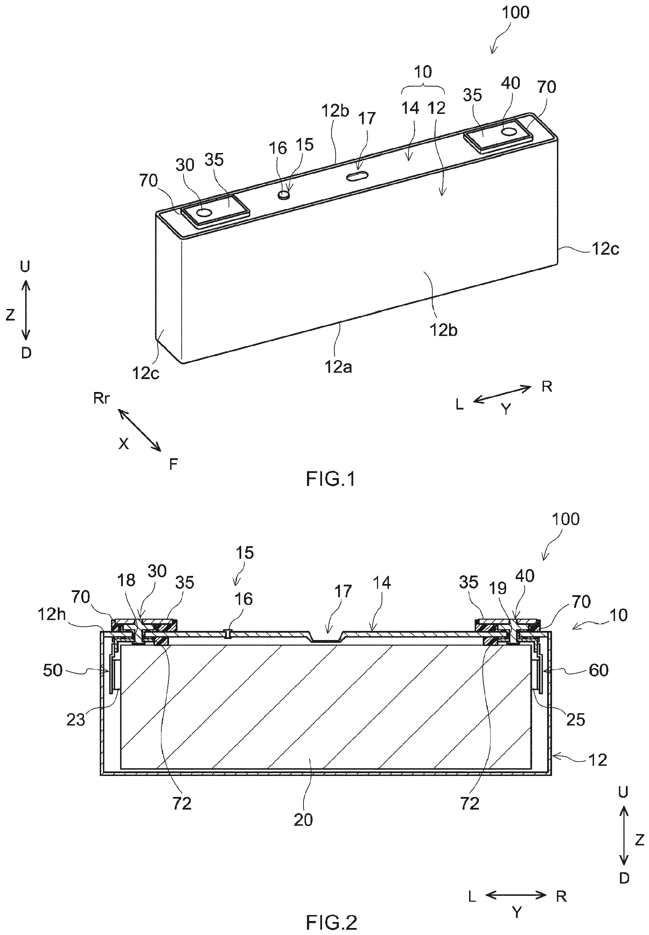

FIG. 1 is a perspective view of a secondary battery 100 according to the present embodiment. FIG. 2 is a view schematically illustrating an internal structure of the secondary battery 100. Reference signs L, R, F, Rr, U, and D in the drawings indicate left, right, front, rear, up, and down, and reference signs X, Y, and Z in the drawings indicate a lateral direction, a longitudinal direction perpendicular to the lateral direction, and an upper/lower direction of the secondary battery 100, respectively. In this regard, these directions are merely directions for convenience of description, and by no means limit an installation mode of the secondary battery 100. Furthermore, the dimensional relationship (the lengths, the widths, the thicknesses, and the like) in each figure does not necessarily reflect an actual dimensional relationship.

### <Secondary Battery>

As illustrated in FIGS. 1 and 2, the secondary battery 100 includes an electrode body 20, an electrolyte solution (not illustrated), a battery case 10 that houses the electrode body 20 and the electrolyte solution, a positive electrode terminal 30, and a negative electrode terminal 40.

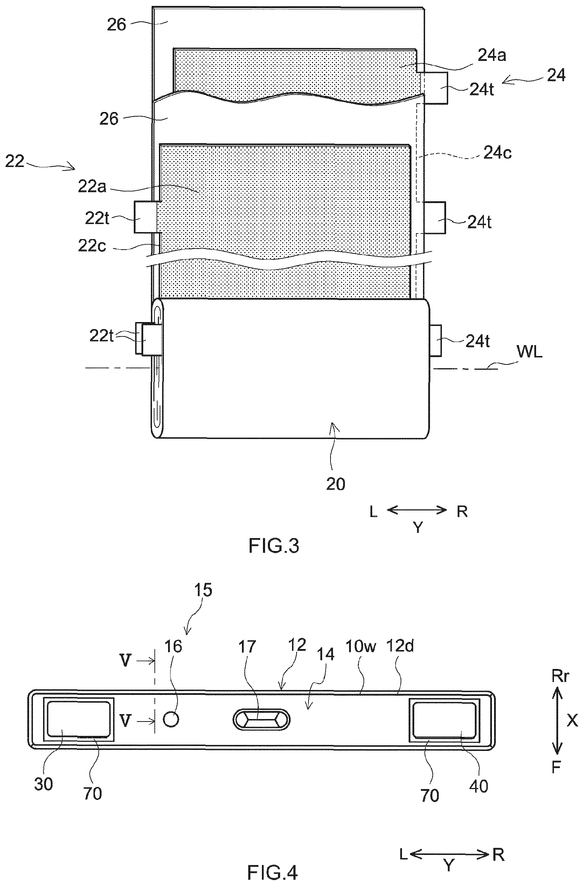

FIG. 3 is a view schematically illustrating a configuration of the electrode body 20. Here, as illustrated in FIG. 3, the electrode body 20 is a wound electrode body that is formed by laminating a strip-shaped positive electrode sheet 22 and a strip-shaped negative electrode sheet 24 in a state where the positive electrode sheet 22 and the negative electrode sheet 24 are insulated with two strip-shaped separators 26 interposed therebetween, and winding the positive electrode sheet 22 and the negative electrode sheet 24 about a winding axis WL in the longitudinal direction. In this regard, the electrode body may be a laminated electrode body formed by stacking a square positive electrode sheet and a square negative electrode sheet in a state where the positive electrode sheet and the negative electrode sheet are insulated by square separators. Alternatively, the electrode body may be a laminated electrode body formed by stacking a square positive electrode sheet and a square negative electrode sheet in a state where the square positive electrode sheet and the square negative electrode sheet are insulated by meandering separators. Here, as illustrated in FIG. 2, the electrode body 20 adopts a so-called lateral tab structure that a positive electrode tab group 23 and a negative electrode tab group 25 are located on the left and the right of the electrode body 20. In this regard, the electrode body may adopt a so-called upper tab structure that the positive electrode tab group and the negative electrode tab group are located on an upper side of the electrode body.

As illustrated in FIG. 3, the positive electrode sheet 22 is an elongated strip-shaped member. The configuration of the electrode sheet 22 is not limited in particular, and may be the same as that used for conventionally known batteries. For example, the positive electrode sheet 22 includes a positive electrode current collector 22c, and a positive electrode active material layer 22a that is disposed on at least one surface of the positive electrode current collector 22c. Note that the positive electrode sheet 22 may include a positive electrode protection layer (not illustrated) that is configured to have lower electrical conductivity than that of the positive electrode active material layer 22a.

The positive electrode current collector 22c is an elongated strip-shaped member. The positive electrode current collector 22c is made of, for example, a conductive metal such as aluminum, aluminum alloy, nickel, and stainless steel. The positive electrode current collector 22c is a metal foil in this case, and, more specifically, an aluminum foil. The dimension of the positive electrode current collector 22c is not limited in particular, and may be determined as appropriate according to a battery design. One end part (a left end part in FIG. 3) in the longitudinal direction Y of the positive electrode current collector 22c is provided with a plurality of positive electrode tabs 22t. The positive electrode tabs 22t are part of the positive electrode current collector 22c, and made of metal foils (e.g., aluminum foils). At part of the positive electrode tab 22t, the positive electrode active material layer 22a is formed. At at least part of the positive electrode tab 22t, the positive electrode active material layer 22a is not formed, and the positive electrode current collector 22c is exposed. The plurality of positive electrode tabs 22t are laminated at one end part (the left end part in FIG .2) in the longitudinal direction Y to configure the positive electrode tab group 23. The plurality of positive electrode tabs 22t are bent and curved to align edges on the outer side. The positive electrode tab group 23 is connected with the positive electrode terminal 30 with a positive electrode current collector part 50 interposed therebetween.

As illustrated in FIG. 3, the positive electrode active material layer 22a is provided in a belt shape along the longitudinal direction of the strip-shaped positive electrode current collector 22c. The positive electrode active material layer 22a contains a positive electrode active material. As the positive electrode active material, for example, a known positive electrode active material used for a lithium ion secondary battery may be used. More specifically, as the positive electrode active material, a lithium composite oxide, a lithium transition metal phosphate compound, and the like can be used. One type of these positive electrode active materials may be used alone, or two or more types of these materials may be combined and used. The positive electrode active material layer 22a may contain components such as a conductive material and a binder other than the positive electrode active material. As the conductive material, carbon black such as Acetylene Black (AB) and other carbon materials (e.g., graphite) can be suitably used. As the binder, for example, PolyVinylidene DiFluoride (PVDF) or the like may be used.

As illustrated in FIG. 3, the negative electrode sheet 24 is an elongated strip-shaped member. The configuration of the negative electrode sheet 24 is not limited in particular, and may be the same as that used for conventionally known batteries. For example, the negative electrode sheet 24 includes a negative electrode current collector 24c, and a negative electrode active material layer 24a that is disposed on at least one surface of the negative electrode current collector 24c.

The negative electrode current collector 24c has a belt shape. The negative electrode current collector 24c is made of, for example, a conductive metal such as copper, copper alloy, nickel, or stainless steel. The negative electrode current collector 24c is a metal foil in this case, and, more specifically, a copper foil. The dimension of the negative electrode current collector 24c is not limited in particular, and may be determined as appropriate according to a battery design. One end part (a right end part in FIG. 3) in the longitudinal direction Y of the negative electrode current collector 24c is provided with a plurality of negative electrode tabs 24t. The negative electrode tabs 24t are part of the negative electrode current collector 24c, and made of metal foils (e.g., copper foils). At part of the negative electrode tab 24t, the negative electrode active material layer 24a is formed. At at least part of the negative electrode tab 24t, the negative electrode active material layer 24a is not formed, and the negative electrode current collector 24c is exposed. The plurality of negative electrode tabs 24t are laminated at one end part (the right end part in FIG. 2) in the longitudinal direction Y to form the negative electrode tab group 25. The plurality of negative electrode tabs 24t are bent and curved to align edges on the outer side. The negative electrode tab group 25 is connected with the negative electrode terminal 40 with a negative electrode current collector part 60 interposed therebetween.

As illustrated in FIG. 3, the negative electrode active material layer 24a is provided in a belt shape along the longitudinal direction of the strip-shaped negative electrode current collector 24c. The negative electrode active material layer 24a contains a negative electrode active material. The negative electrode active material is not limited in particular, and carbon materials such as graphite, hard carbon, and soft carbon may be used. Graphite may be natural graphite or synthetic graphite, or may be amorphous carbon coated graphite coated with a carbon material whose graphite is amorphous. The negative electrode active material layer 24a may contain components such as a binder or a thickener other than the negative electrode active material. As the binder, for example, Styrene-Butadiene Rubber (SBR), PolyVinylidene DiFluoride (PVDF), or the like can be used. As the thickener, for example, CarboxyMethyl Cellulose or the like can be used.

A separator 26 is an insulation resin sheet in which a plurality of fine through-holes through which charge carriers can pass are formed. The configuration of the separator 26 is not limited in particular, and may be the same as that used for conventionally known batteries. An example of the separator 26 is a porous sheet (film) made of a resin such as PolyEtylene (PE), PolyPropylene (PP), polyester, cellulose, or polyamide. The surface of the separator 26 may be provided with a Heat Resistant Layer (HRL).

As described above, the secondary battery 100 includes an electrolyte solution. The electrolyte solution is not limited in particular, and may be the same as that used for conventionally known batteries. The electrolyte solution may be, for example, a non-aqueous electrolyte solution containing a non-aqueous solvent (organic solvent) and an electrolyte salt (supporting salt). As the non-aqueous solvent, Ethylene Carbonate (EC), DiEthyl Carbonate (DEC), DiMethyl Carbonate (DMC), Ethyl Methyl Carbonate (EMC), and the like can be used. Furthermore, various lithium salts can be used as the supporting salt, and above all, lithium salts such as LiPF₆ and LiBF₄ are suitable. The electrolyte solution may contain, for example, various additives such as a coating formation agent, a gas generating agent, a dispersant, and a thickener.

As illustrated in FIGS. 1 and 2, the battery case 10 includes a case main body 12 and a sealing plate 14. The positive electrode terminal 30 and the negative electrode terminal 40 are attached to the sealing plate 14. The positive electrode terminal 30 is attached to one end part (a left end part in FIGS. 1 and 2) in the longitudinal direction Y of the sealing plate 14. The negative electrode terminal 40 is attached to an other end part (a right end part in FIGS. 1 and 2) in the longitudinal direction Y of the sealing plate 14. The positive electrode terminal 30 and the negative electrode terminal 40 are inserted in terminal attachment holes 18 and 19, and extend from an outer surface side to an inner surface side of the sealing plate 14. The lower end of the positive electrode terminal 30 is connected with the positive electrode current collector part 50 inside the case main body 12. The positive electrode terminal 30 is connected with the positive electrode sheet 22 of the electrode body 20 with the positive electrode current collector part 50 interposed therebetween. The lower end of the negative electrode terminal 40 is connected with the negative electrode current collector part 60 inside the case main body 12. The negative electrode terminal 40 is connected with the negative electrode sheet 24 of the electrode body 20 with the negative electrode current collector part 60 interposed therebetween.

The positive electrode terminal 30 is preferably made of a metal, and is preferably made of, for example, aluminum or aluminum alloy. The negative electrode terminal 40 is preferably made of a metal, and is preferably made of, for example, copper or copper alloy. As illustrated in FIG. 1, the positive electrode terminal 30 and the negative electrode terminal 40 are electrically connected with plate-like external conductive members 35 outside the battery case 10. The external conductive members 3 5 are members to which busbars are attached when a plurality of secondary batteries are electrically connected with each other. The external conductive member 35 is preferably made of a metal, and is preferably made of, for example, aluminum or aluminum alloy. In this regard, the external conductive members 35 are not indispensable, and can be also omitted in other embodiments.

As illustrated in FIGS. 1 and 2, the external conductive members 35 are each insulated by an external insulation member 70. Furthermore, gaskets 72 are attached to the terminal attachment holes 18 and 19 of the sealing plate 14, respectively. Thus, the electrode terminals (the positive electrode terminal 30 and the negative electrode terminal 40) inserted in the terminal attachment holes 18 and 19 are insulated. The external insulation members 70 and the gaskets 72 may be made of a fluorine resin such as PerFluoroalkoxy Alkane (PFA) and PolyTetraFluoroEthylene (PTFE), a synthetic resin material such as PolyPhenyleneSulfide (PPS), or the like.

As illustrated in FIG. 1, the battery case 10 has an outer shape of a bottomed cuboid shape (angular type). Conventionally known materials can be used for the battery case 10 without particular limitation. The battery case 10 (the case main body 12 and the sealing plate 14) can be made of, for example, aluminum, aluminum alloy, stainless steel, iron, iron alloy, and the like. Above all, the battery case 10 is preferably made of aluminum.

It is preferable to make the electrode body 20 larger from a viewpoint of increasing capacity of the battery, and the battery case 10 also tends to become large. The battery case 10 of the secondary battery 100 disclosed herein preferably has the size in which the relatively large electrode body 20 can be housed. Although not limited in particular, for example, the length in the longitudinal direction Y of the battery case 10 is preferably 100 mm or more and 500 mm or less, and the length in the longitudinal direction Y is more preferably 200 mm or more and 400 mm or less. Although not limited in particular, for example, the length in the lateral direction X of the battery case 10 is preferably 10 mm or more and 60 mm or less, and the length in the lateral direction X is more preferably 20 mm or more and 50 mm or less. Although not limited in particular, the height of the battery case 10 (the length in the upper/lower direction Z) is preferably, for example, 70 mm or more and 120 mm or less.

The case main body 12 is a housing that houses the electrode body 20 and the non-aqueous electrolyte solution. The case main body 12 is a bottomed and angular container that has an opening 12h in one side surface (upper surface here). The opening 12h has a substantially rectangular shape. The case main body 12 includes long sides and short sides, and includes a bottom surface 12a that has a substantially rectangular shape in plan view, a pair of long sidewalls 12b that extend from the long sides of the bottom surface 12a to an upper side in the upper/lower direction Z and face each other, and a pair of short sidewalls 12c that extend from the short sides of the bottom surface 12a to the upper side in the upper/lower direction Z and face each other. The areas of the short sidewalls 12c are smaller than the areas of the long sidewalls 12b. Although not limited in particular, an average thickness (average plate thickness) of the case main body 12 is preferably approximately 0.5 mm or more such as 1 mm or more from a viewpoint of durability and the like, and may be approximately 5 mm or less such as 3 mm or less from a viewpoint of cost and an energy density.

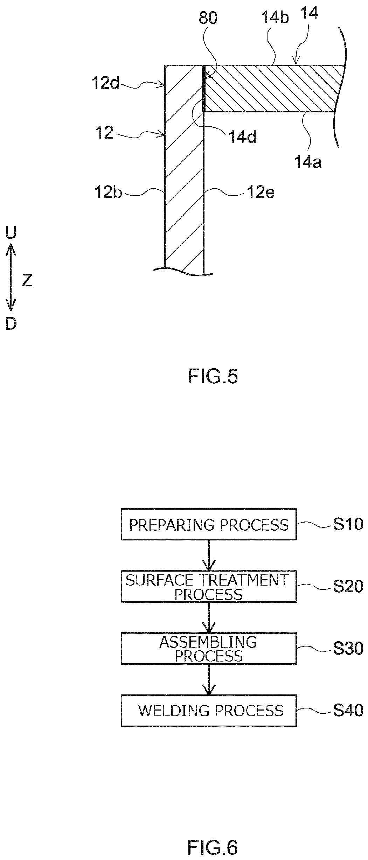

The sealing plate 14 is a member that has a substantially rectangular shape in plan view here, and seals the opening 12h of the case main body 12. The sealing plate 14 includes an inner surface 14a (see FIG. 5) that is a surface on an inner side (a side facing the electrode body 20) of the secondary battery 100, and an outer surface 14b (see FIG. 5) that is a surface on the outer side. As illustrated in FIG. 1, the sealing plate 14 faces the bottom surface 12a of the case main body 12. The sealing plate 14 is provided with an injection hole 15 and a gas exhaust valve 17. The injection hole 15 is a through-hole for injecting an electrolyte solution inside the battery case 10 after the sealing plate 14 is assembled to the case main body 12. The injection hole 15 is sealed by a sealing member 16 after the electrolyte solution is injected. The gas exhaust valve 17 is configured to be fractured when the pressure in the battery case 10 becomes a predetermined value or more, and exhaust a gas in the battery case 10 to an outside. Although not limited in particular, an average thickness (average plate thickness) of the sealing plate 14 is preferably approximately 0.3 mm or more such as 0.5 mm or more from a viewpoint of durability and the like, and may be approximately 5 mm or less such as 3 mm or less or may be 2.5 mm or less from a viewpoint of cost and an energy density.

FIG. 4 is a plan view of FIG. 1. As illustrated in FIG. 4, the sealing plate 14 and a periphery part (hereinafter, referred to as an "opening periphery part 12d") of the opening 12h of the case main body 12 are welded and joined, and a welded part 10w is formed along a boundary between the case main body 12 and the sealing plate 14. This welding and joining can be achieved by, for example, laser welding. The welded part 10w is a part that is formed by performing laser welding on the boundary between the case main body 12 and the sealing plate 14, and melting a constituent metal of the case main body 12 and a constituent metal of the sealing plate 14. Here, the welded part 10w is located on an outer surface side of the sealing plate 14. At the welded part 10w, an inner periphery of the opening 12h of the case main body 12 and an outer periphery of the sealing plate 14 are coupled coplanarly. The welded part 10w is continuously formed in a substantially annular shape along the boundary between the sealing plate 14 and the case main body 12 in plan view.

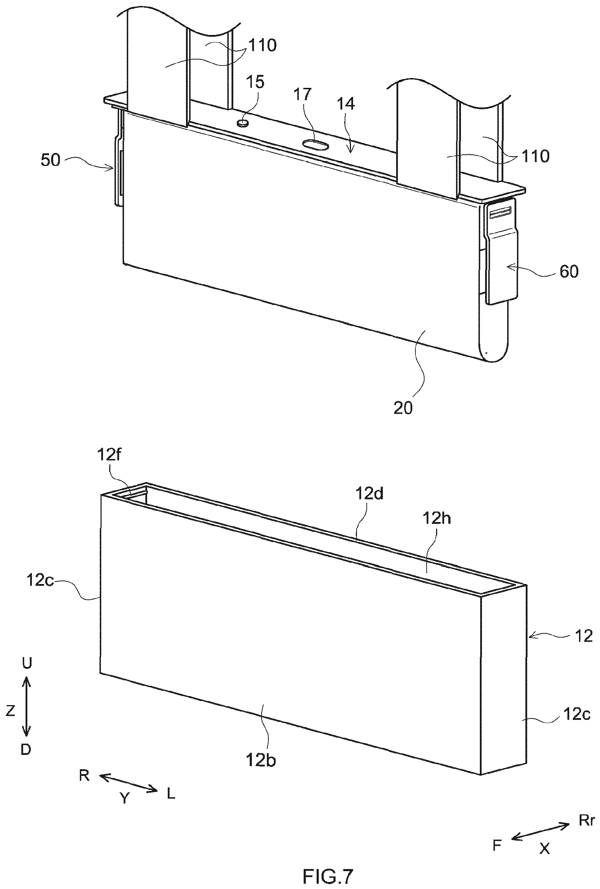

The case main body 12 may be provided with support parts 12f (see FIG. 7) on inner wall surfaces of a pair of short side parts of the opening periphery part 12d. The support parts 12f are formed protruding in an inner side direction of the case main body 12. Consequently, the sealing plate 14 fitted to the opening 12h is placed on the support parts 12f, and does not sink deeply from the opening 12h. Hence, the sealing plate 14 is disposed such that the outer surface 14b of the sealing plate 14 is coplanar with the upper surface of the adjacent opening periphery part 12d. Note that the support parts 12f may be provided at the short side parts of the opening periphery part 12d, yet may be provided at four corner parts.

FIG. 5 is a schematic cross-sectional view taken along line V-V in FIG. 4. As illustrated in FIG. 5, the secondary battery 100 disclosed herein includes a surface treatment part 80 that is subjected to surface treatment to black such that a light absorptivity in the wavelength range of 300 nm to 1100 nm is higher in at least part of an area in which the opening periphery part 12d and the sealing plate 14 face each other than at other portions. Note that the "light absorptivity" in this description refers to a value obtained by calculating equation: light absorptivity A (%) = 100%-T (%)-R (%); from a transmittance T (%) and a reflectivity R (%) of a sample measured using a spectrophotometer. Furthermore, "the light absorptivity in the wavelength range of 300 nm to 1100 nm" in this description refers to a minimum laser light absorptivity in the wavelength range. The "light absorptivity" in the following description refers to a minimum light absorptivity in a wavelength range of 300 nm to 1100 nm as described above unless specified in particular.

Although not limited in particular, the light absorptivity of the surface treatment part 80 in the wavelength range of 300 nm to 1100 nm is preferably 60% or more. The light absorptivity may mean a rate of laser light absorbed by the surface treatment part 80 to laser light radiated to the case main body 12 and the sealing plate 14 in a welding process S40 to be described later. This surface treatment part 80 is provided in at least part of the area in which the opening periphery part 12d and the sealing plate 14 face each other, so that it is possible to effectively absorb the laser light at a time of welding. Consequently, it is possible to suitably prevent the laser light from entering inside the case through, for example, the gap of the boundary of the sealing plate 14 and the case main body 12.

Although not limited in particular, the light absorptivity of the surface treatment part 80 in the wavelength range of 300 nm to 1100 nm may be over 60%, may be 65% or more, may be 70% or more, and may be 80% or more. The light absorptivity of the surface treatment part 80 may be 100%, yet, practically speaking, is preferably 95% or less, and may be 90% or less. The light absorptivity can be adjusted as appropriate according a surface treatment (e.g., anodizing treatment) execution time, and a type and an amount of a black colorant to be described later.

Note that the transmittance T (%) and the reflectivity R (%) of the surface treatment part 80 are not limited in particular. From a viewpoint of making it easy to increase the light absorptivity, in some aspects, the transmittance of the surface treatment part 80 for specific laser light at a wavelength at which the light absorptivity is minimum in the wavelength range of 300 nm to 1100 nm may be less than, for example, 35%, may be less than 20%, and may be less than 10%. A lower limit of the transmittance of the surface treatment part 80 is not limited in particular, may be, for example, 1% or more, and may be 5% or more. Furthermore, the reflectivity of the surface treatment part 80 for specific laser light at a wavelength at which the light absorptivity is minimum in the wavelength range of 300 nm to 1100 nm may be less than, for example, 20%, may be less than 10%. A lower limit of the reflectivity of the surface treatment part 80 is not limited in particular, and may be, for example, 0. From a viewpoint of practicality, the reflectivity of the surface treatment part 80 is usually suitably 1% or more, and may be 3% or more.

A mode of the surface treatment part 80 is not limited in particular as long as the mode can increase the light absorptivity in the wavelength range of 300 nm to 1100 nm. The surface treatment part 80 is treated to black, so that it is possible to improve the light absorptivity. The surface treatment part 80 is preferably subjected to surface treatment to black by, for example, anodizing processing, coloring processing, chemical conversion processing, plating processing, and coating processing. The surface treatment part 80 may be configured by being subjected to a plurality of processing.

Although not limited in particular, the surface treatment part 80 is configured with an anodic coating. That is, the battery case 10 (the case main body 12 and the sealing plate 14) is made of aluminum, and an aluminum oxide layer formed by anodizing processing is preferably formed in at least of the area in which the opening periphery part 12d and a side surface 14d of the sealing plate face each other. Consequently, it is possible to suitably improve the light absorptivity of the surface treatment part 80.

Furthermore, although not limited in particular, the surface treatment part 80 may be configured with a black colored layer including a black colorant. The black colorant is contained in, for example, a state where the black colorant is dispersed. Conventionally known pigments and dyes can be used as the black colorant. Examples of the pigment include inorganic pigments and organic pigments. Specific examples of the black colorant include carbon black, graphite, aniline black, titanium black, inorganic pigment hematite, activated carbon, and the like. One type of the black colorant can be used alone, or two types or more of the black colorants can be combined as appropriate and used.

As described above, the surface treatment part 80 is formed in at least part of the area in which the opening periphery part 12d and the sealing plate 14 face each other. The surface treatment part 80 may be formed on one of the opening periphery part 12d of the case main body 12 and the sealing plate 14, or may be formed on both of the opening periphery part 12d of the case main body 12 and the sealing plate 14. In the case where the surface treatment part 80 is formed on the opening periphery part 12d, more specifically, the surface treatment part 80 is preferably formed in at least part of an inner wall surface 12e of the opening periphery part 12d, and may be formed on the inner wall surface 12e and in the entire area that faces the side surface 14d of the sealing plate 14. In the case where the surface treatment part 80 is formed on the opening periphery part 12d, the length in the upper/lower direction Z of the surface treatment part 80 is preferably substantially the same as the average thickness of the sealing plate 14. Although not limited in particular, in the case where the surface treatment part 80 is formed on the opening periphery part 12d, approximately 0.1 mm to 6 mm (e.g., 0.2 mm to 5 mm) of the surface treatment part 80 is preferably formed from the upper end to the bottom surface side of the opening periphery part 12d. Consequently, it is possible to suitably prevent laser light from entering inside the case.

In the case where the surface treatment part 80 is formed on the sealing plate 14, more specifically, the surface treatment part 80 may be formed on at least part of the side surface 14d of the sealing plate 14, or may be formed in the entire side surface 14d. In the case where the surface treatment part 80 is formed on the side surface 14d of the sealing plate 14, the length in the upper/lower direction Z of the surface treatment part 80 may be substantially the same as or may be different from the average thickness of the sealing plate 14. When, for example, butted with the inner wall surface 12e of the case main body 12, the surface treatment part 80 is preferably provided in at least an area on a lower side of the side surface 14d (i.e., an area of 50% or less from the inner surface side when the average thickness of the sealing plate 14 is 100%). Although not limited in particular, approximately 0.1 mm to 5 mm (e.g., 0.2 mm to 4 mm) of the surface treatment part 80 is preferably formed from the inner surface side to the outer surface side of the sealing plate 14. Consequently, it is possible to provide the secondary battery 100 that suitably prevents laser light from entering inside the case at the time of welding, and has higher safety.

### <Secondary Battery Manufacturing Method>

The lithium ion secondary battery will be exemplified and described as a preferred embodiment of the power storage device manufacturing method disclosed herein, yet does not intend to limit an application target to such a battery.

FIG. 6 is a flowchart roughly illustrating the power storage device manufacturing method disclosed herein. As illustrated in FIG. 6, the power storage device manufacturing method disclosed herein may include a preparing process S10 of preparing the above-described case main body 12, sealing plate 14, and electrode body 20, a surface treatment process S20 of forming the surface treatment part 80, an assembling process S30 of housing the electrode body 20 inside the case main body 12, attaching the sealing plate 14 to the case main body 12, and assembling the power storage device, the welding process S40 of radiating laser light to the boundary between the case main body 12 and the sealing plate 14 from the outer surface side of the sealing plate 14, and performing laser welding on the case main body 12 and the sealing plate 14. The welding process S40 may further include a temporary welding process S42 of radiating the laser light to a predetermined portion of the boundary between the case main body 12 and the sealing plate 14 from the outer surface side of the sealing plate 14, and temporarily welding the case main body 12 and the sealing plate 14, and a main welding process S44 of making the laser light scan along the boundary between the case main body 12 and the sealing plate 14, and welding the entire circumferences of the case main body 12 and the sealing plate 14. The manufacturing method disclosed herein is characterized in such a way that the light absorptivity of a laser used in the welding process S40 is higher in at least part of the area in which the opening periphery part 12d and the sealing plate 14 face each other than at the other portions, and other processes may be the same as those of the conventional technique. Furthermore, other processes may be included at random stages.

Note that the preparing process S10, the surface treatment process S20, and the assembling process S30 of the above preparing process S10 to welding process S40 can be performed in random order. One or more of the preparing process S10, the surface treatment process S20, and the assembling process S30 may be performed first, or two or more of the preparing process S10, the surface treatment process S20, and the assembling process S30 may be simultaneously performed. For example, the surface treatment process S20 and the assembling process S30 can be also performed in parallel.

When the secondary battery (power storage device) is manufactured, the case main body 12 and the sealing plate 14 are typically made separately and prepared. Hence, each part may have a dimensional tolerance, and this dimensional tolerance may produce a slight gap between the case main body 12 and the sealing plate 14. Although this gap can be substantially eliminated by being pressed by a clamp in a state where the sealing plate 14 is attached to the case main body 12, wear of the clamp and deformation following the wear may produce the slight gap between the case main body 12 and the sealing plate 14. Furthermore, a combination of the case main body 12 and the sealing plate 14 tends produce a slight gap. Alternatively, relative positions of the laser radiation device and the battery case 10, that is, a radiation angle of laser light with respect to the laser light radiation position may also change due to a workpiece attachment and fixing error per manufactured individual product. When laser light is radiated in a state where such a gap is produced at any position of the boundary between the case main body 12 and the sealing plate 14, the laser light directly enters inside the case through the gap, that is, so-called "laser pass" may occur. Alternatively, even when an angle of laser light is adjusted to prevent occurrence of the laser pass, the laser light may be reflected in the gap between the opening periphery part 12d and the sealing plate 14, and secondary reflected light or tertiary reflected light may enter inside the case. When entering inside the case, the laser light tends fracture a housed object (e.g., the electrode body housed in the case) inside the case, which is not preferable. Hence, the manufacturing method disclosed herein is configured such that the light absorptivity of the laser used in the welding process is higher in at least part of the area in which the opening periphery part 12d and the sealing plate 14 face each other than at the other portions. Consequently, it is possible to provide the power storage device that can prevent the laser light from entering inside the case, and is more superior in safety.

In the preparing process S 10, the above-described case main body 12, sealing plate 14, and electrode body 20 are prepared. The electrode body 20 can be made according to a known method. As illustrated in FIG. 3, when the electrode body 20 is a wound electrode body, the wound electrode body can be prepared as follows, for example. First, the strip-shaped positive electrode sheet 22 and the strip-shaped negative electrode sheet 24 are laminated in a state where the positive electrode sheet 22 and the negative electrode sheet 24 are insulated by two strip-shaped separators 26. In this case, the positive electrode tabs 22t of the positive electrode sheet 22 and the negative electrode tabs 24t of the negative electrode sheet 24 are overlaid protruding in respectively opposite directions from the end parts in the longitudinal direction Y of the two separators 26. Next, the prepared laminated body is wound in the longitudinal direction about the winding axis. The laminated body can be wound according to a known method. The wound laminated body is subjected to pressing processing to make the winding electrode body of a flat shape. This pressing processing may be performed using a known pressing device used to manufacture a general winding electrode body of a flat shape, and is not limited in particular. Thus, the electrode body 20 can be prepared.

In the surface treatment process S20, surface treatment is performed such that the light absorptivity of the laser used in the welding process S40 to be described later is higher at at least part of the above prepared case main body 12 and sealing plate 14 than at the other portions. Preferably, the surface treatment to black may be performed such that the light absorptivity in the wavelength range of 300 nm to 1100 nm is higher in at least part of the area in which the opening periphery part 12d and the sealing plate 14 face each other than at the other portions. Although not limited in particular, the surface treatment to black is preferably performed such that the light absorptivity in the wavelength range of 300 nm to 1100 nm is 60% or more in at least part of the area in which the opening periphery part 12d and the sealing plate 14 face each other, and the surface treatment to black is preferably performed such that the light absorptivity is 75% or more. The surface treatment may be performed such that the light absorptivity is 100%, yet, practically speaking, the surface treatment is preferably performed such that the light absorptivity is approximately 95% or less. The method of the surface treatment is not limited in particular, and examples of the method of the surface treatment include methods such as anodizing processing, coloring processing, chemical conversion processing, plating processing, and coating processing.

The surface treatment process S20 may be performed by, for example, anodizing processing. The anodizing processing can be performed using a known method. By changing a time of the anodizing processing, it is possible to adjust the light absorptivity of the surface treatment part 80. By, for example, performing the anodizing processing for one minute or more to approximately 20 minutes (preferably, two minutes or more to 15 minutes or less), it is possible to make the light absorptivity in the wavelength range of 300 nm to 1100 nm 60% or more. Note that, in a case where surface treatment to black is performed by the anodizing processing in the surface treatment process S20, the case main body 12 and the sealing plate 14 made of aluminum are prepared in the preparing process S10.

Furthermore, the surface treatment process S20 may be performed by coloring processing. More specifically, a black colorant is applied to desired positions of the case main body 12 and/or the sealing plate 14. The black colorant may be a conventionally known black inorganic pigment or black organic pigment. The surface treatment process S20 can be performed using, for example, aqueous ink obtained by dispersing a black pigment and a resin in an aqueous solvent, and organic ink obtained by dispersing a black pigment and a resin in an organic solvent having high volatility. Note that both of the above anodizing processing and coloring processing may be performed.

When the surface treatment process S20 is performed by the coloring processing, the surface treatment process S20 and the assembling process S30 to be described later may be simultaneously performed. More specifically, there may be employed a configuration where, when the sealing plate 14 is attached to the case main body 12, ink containing the black colorant is supplied in advance to gripping members 110 (see FIG. 7) that grip the sealing plate 14, and, when the gripping members 110 grip the sealing plate 14, surface treatment to black is performed. Consequently, it is possible to easily perform surface treatment to black at desired positions. Furthermore, it is possible to shorten a manufacturing process, which is also preferable from a viewpoint of manufacturing efficiency.

FIG. 7 is a view schematically illustrating how the assembling process S30 is performed. In the assembling process S30, the prepared electrode body 20 is housed inside the case main body 12, and the sealing plate 14 is attached to the case main body 12 to assemble the secondary battery 100. More specifically, the electrode body 20 is attached to the sealing plate 14 first. The sealing plate 14 and the electrode body 20 are connected with the positive electrode current collector part 50 and the negative electrode current collector part 60 interposed therebetween. Next, as illustrated in FIG. 7, the sealing plate 14 (the side surface 14d here) is gripped by the gripping members 110, and the electrode body 20 is inserted inside the case main body 12. In this case, the electrode body 20 is preferably inserted and disposed inside the case main body 12 in such a direction that the winding axis WL lies along the bottom surface 12a (i.e., the direction in which the winding axis WL is parallel to the longitudinal direction Y).

The sealing plate 14 is attached to the opening 12h of the case main body 12. In the example illustrated in FIG. 7, the outer diameter of the sealing plate 14 is formed slightly smaller than the inner diameter of the opening 12h of the case main body 12, and the sealing plate 14 is fitted to the opening 12h. Part of the sealing plate 14 is placed on the support parts 12f of the case main body 12 such that the inner wall surface 12e of the case main body 12 and the side surface 14d of the sealing plate 14 face each other. The support parts 12f can prevent entry of the laser light in the welding process S40 to be described later. On the other hand, the strength of the support parts 12f cannot be sufficiently secured at the pair of long side parts of the opening periphery part 12d, and therefore it is difficult to provide the support parts 12f. Consequently, surface treatment is performed such that the light absorptivity of the laser used in the welding process S40 is higher at the long side parts in particular in the area in which the opening periphery part 12d and the sealing plate 14 face each other than at the other portions, so that it is possible to suitably exhibit the effect of the technique disclosed herein. Furthermore, it is particularly difficult to provide the support parts 12f to the long side parts from the above viewpoint in the power storage device of a relatively large size (e.g., the length in the longitudinal direction Y is approximately 100 mm or more and 500 mm or less). Consequently, the surface treatment is performed on the power storage device of the large size such that the light absorptivity of the laser used in the welding process S40 is higher at the long side parts in the area in which the opening periphery part 12d and the sealing plate 14 face each other than at the other portions, so that it is possible to further exhibit the effect of the technique disclosed herein.

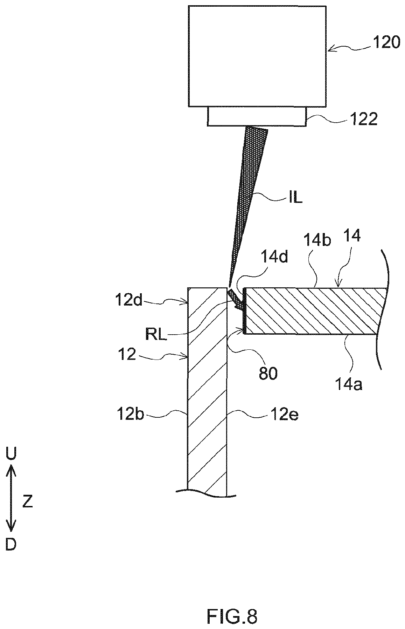

FIG. 8 is a view schematically how the welding process S40 is performed. Note that, in FIG. 8, the gap between the case main body 12 and the sealing plate 14 is intentionally drawn largely for the sake of description. In the welding process S40, after the electrode body 20 is housed inside the battery case 10, laser light II, is radiated to the boundary between the case main body 12 and the sealing plate 14 using a laser radiation device 120. As described above, the welding process S40 may include the temporary welding process S42 of radiating the laser light IL to a predetermined portion of the boundary between the case main body 12 and the sealing plate 14, and temporarily welding the case main body 12 and the sealing plate 14, and the main welding process S44 of making the laser light II, scan along the boundary between the case main body 12 and the sealing plate 14, and welding the entire circumferences of the case main body 12 and the sealing plate 14.

The laser radiation device 120 used in the welding process S40 (the temporary welding process S42 and the main welding process S44) may be the same as conventionally known devices, and are not limited in particular. The laser radiation device 120 includes, for example, a laser radiation unit 122. Here, a fiber laser is adopted for the laser radiation unit 122, and therefore the laser radiation unit 122 is configured as a fiber laser irradiator. However, the laser of the laser radiation unit 122 is not limited to the fiber laser, and a type thereof is not limited as long as the laser radiation unit 122 can weld the case main body 12 and the sealing plate 14. The laser may be, for example, a solid-state laser (e.g., a YAG laser, a glass laser, a ruby laser, and the like), a liquid laser (e.g., a dye laser and the like), a gas laser (e.g., a CO₂ laser and the like), a semiconductor laser, a free electron laser, a chemical laser, and the like.

As the laser radiation device 120, a device whose laser wavelength is 300 nm to 1100 nm is preferably used. By using the laser radiation device 120 whose laser wavelength is in the above range, it is possible to suitably weld the case main body 12 and the sealing plate 14. Note that the welding device used in the temporary welding process S42 and the welding device used in the main welding process S44 may be the same or may be different. From a viewpoint of manufacturing efficiency, it is preferable to use the same welding device in the temporary welding process S42 and the main welding process 44.

As described above, in a preferable aspect, in the surface treatment process S20, the surface treatment to black is performed such that the light absorptivity in the wavelength range of 300 nm to 1100 nm is higher in at least part of the area in which the opening periphery part 12d and the sealing plate 14 face each other than at the other portions. Consequently, by using the laser radiation device 120 whose laser wavelength is 300 nm to 1100 nm in the welding process S40, it is possible to suitably prevent the laser light from entering inside the case.

In the temporary welding process S42, laser light is radiated to the predetermined portion of the boundary between the case main body 12 and the sealing plate 14. Consequently, it is possible to fix the positional relationship between the case main body 12 and the sealing plate 14. Furthermore, by performing the temporary welding process S42 in a process before the main welding process S44 to be described later, it is possible to prevent the sealing plate 14 from deforming due to heat, and achieve more accurate welding and joining.

As illustrated in FIG. 8, the laser light IL is radiated to the boundary between the case main body 12 and the sealing plate 14 from the outer surface side of the sealing plate 14. In the temporary welding process S42, laser welding is performed to such a degree that the case main body 12 and the sealing plate 14 are not completely melted at predetermined positions (e.g., approximately four portions or more and 20 portions or more and, preferably, 8 portions or more and 16 portions or less). For example, the temporary welding process S42 can be performed by making the laser light scan the center side to the outer edge side of the sealing plate 14 at the predetermined positions. Alternatively, the temporary welding process S42 can be performed by making the laser light scan the outer edge side to the center side of the sealing plate 14 at the predetermined positions. Conditions of laser welding in the temporary welding process S42 are not limited in particular. An angle of the laser light (a smaller angle among angles formed by a laser radiation direction and the outer surface 14b (horizontal plane) of the sealing plate 14) is preferably, for example, 80° or more and 87° or less, and is more preferably 80° or more and 85° or less. Furthermore, a laser output value is preferably 1000 W or more and 5000 W or less, and is more preferably 2000 W or more and 4000 W or less. Although not limited in particular, a laser scanning speed may be 100 mm/second to 200 mm/second, and is preferably 150 mm/second to 180 mm/second.

According to the manufacturing method disclosed herein, the light absorptivity of the laser used in the temporary welding process is high at the portion temporarily welded in the temporary welding process S42 than at the other portions. In the temporary welding process S42, the case main body 12 and the sealing plate 14 are not completely melted as described above, and therefore a molten pool is not formed. Hence, the above laser pass readily occurs, and the reflected light RL of the laser light IL is readily produced. That is, the laser light readily enters inside the case in the temporary welding process S42. Consequently, the surface treatment part 80 is provided at at least a position welded in the temporary welding process S42, so that it is possible to suitably prevent the laser light from entering inside the case.

In the main welding process S44, the laser light is caused to scan along the boundary between the case main body 12 and the sealing plate 14, and the entire circumferences of the case main body 12 and the sealing plate 14 are welded. Consequently, the welded part 10w is formed at the boundary between the case main body 12 and the sealing plate 14, and it is possible to seal the battery case 10 airtight.

As illustrated in FIG. 8, the laser light IL is radiated to the boundary between the case main body 12 and the sealing plate 14 from the outer surface side of the case main body 12. In the main welding process S44, the constituent metal of the case main body 12 and the constituent metal of the sealing plate 14 are melted, and the molten pool is formed. The condition of laser welding in the main welding process S44 is not limited in particular. An angle of the laser light (a smaller angle among angles formed by the laser radiation direction and the outer surface 14b (horizontal plane) of the sealing plate 14) is preferably, for example, 80° or more and 87° or less, and is more preferably 80° or more and 85° or less. Furthermore, a laser output value is preferably 1000 W or more and 5000 W or less, and is more preferably 2000 W or more and 4000 W or less. Furthermore, although not limited in particular, the laser scanning speed may be 100 mm/second to 200 mm/second, and is preferably 150 mm/second to 180 mm/second.

### <Modified Example>

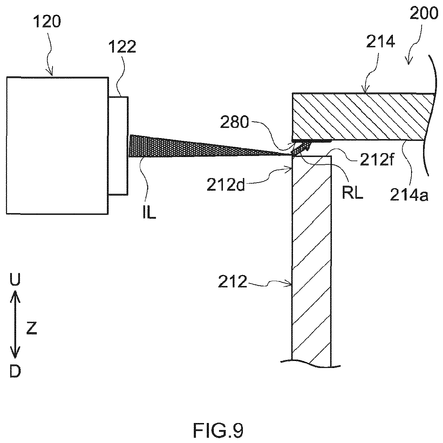

In the above embodiment, the sealing plate 14 is attached to the opening 12h of the case main body 12 such that the inner wall surface 12e of the opening periphery part 12d of the case main body 12 and the side surface 14d of the sealing plate 14 face each other. However, the technique disclosed herein is not limited to the above embodiment. FIG. 9 is a view of a secondary battery 200 according to the modified example corresponding to FIG. 8. Note that, in FIG. 9, a gap between a case main body 212 and a sealing plate 214 is intentionally drawn largely for the sake of description. In the secondary battery 200, the sealing plate 214 is attached to the case main body 212 such that an upper end 212f of an opening periphery part 212d of the case main body 212 and an inner surface 214a of the sealing plate 214 face each other. When the upper end 212f of the opening periphery part 212d of the case main body 212 and the inner surface 214a of the sealing plate 214 are butted, the laser light IL is radiated substantially horizontally to the boundary between the case main body 212 and the sealing plate 214 in the welding process S40 as illustrated in FIG. 9. In a case where there is a slight gap between the sealing plate 214 and the case main body 212 due to the above dimensional tolerance or the like, it is concerned that the radiated laser light IL is reflected between the sealing plate 214 and the case main body 212, and the reflected light RL enters inside the case. Hence, the secondary battery 200 includes a surface treatment part 280 that is subjected to surface treatment such that a light absorptivity of a laser used in the welding process S40 is high in at least part of an area in which the upper end 212f of the opening periphery part 212d and the inner surface 214a of the sealing plate 214 face each other. The surface treatment part 280 may be formed on one of the upper end 212f of the opening periphery part 212d and the inner surface 214a of the sealing plate 214, or may be formed on both of the upper end 212f of the opening periphery part 212d and the inner surface 214a of the sealing plate 214. The surface treatment part 280 is preferably subjected to surface treatment to black such that the light absorptivity in the wavelength range of 300 nm to 1100 nm is 60% or more, and is more preferably subjected to surface treatment to black such that the light absorptivity is 75% or more. The surface treatment part 280 may be subjected to surface treatment such that the light absorptivity is 100%, yet practically speaking, is subjected to the surface treatment such that the light absorptivity is approximately 95% or less. The surface treatment part 280 can be formed by performing the above-described surface treatment process S20 in a process before the welding process S40.

### <Application of Battery>

The above-described battery can be used for various applications, and can be suitably used as a power source (driving power source) for a motor that is mounted on a vehicle such as a passenger car or a track. Although types of vehicles are not limited in particular, examples of the vehicles include a Plug-in Hybrid Electric Vehicle (PHEV), a Hybrid Electric Vehicle (HEV), and a Battery Electric Vehicle (BEV). The battery can be suitably used to assemble an assembled battery.

Hereinafter, although test examples related to the present disclosure will be described, this does not intend to limit the present disclosure to the following test examples.

### <Example 1>

First, lithium Nickel Manganese Cobalt oxide (NCM) that was a positive electrode active material, Acetylene Black (AB) that was a conductive member, and PVDF that was a binder were prepared. These lithium nickel manganese cobalt oxide, acetylene black, and PVDF were mixed in N-Methyl Pyrrolidone (NMP) that was a solvent, and a positive electrode active material layer formation slurry was prepared. This slurry was applied in a belt shape to both surfaces of an elongated aluminum foil, and dried to make a positive electrode sheet. Next, graphite (C) that was a negative electrode active material, Styrene-Butadiene Rubber (SBR) that was a binder, and CarboxyMethyl Cellulose (CMC) that was a dispersant were prepared. These graphite, styrene-butadiene rubber, and carboxymethyl cellulose were mixed in ion exchanged water that was a solvent to prepare a negative electrode active material layer formation slurry. This slurry was applied in a belt shape to both surfaces of an elongated copper foil to make a negative electrode sheet. Furthermore, two separator sheets that each included a heat resistant layer including alumina and PVDF on a surface of a base material part made of PE were prepared. The made positive electrode sheet and negative electrode sheet were laminated facing each other with the separator sheets interposed therebetween, and wound to make an electrode body.

Next, a bottomed case main body including an opening on one side surface facing a bottom surface, and a sealing plate of a rectangular shape sealing the opening were prepared. In example 1, the side surfaces of the sealing plate were colored black using a permanent marker. A light absorptivity of the portions colored black (i.e., the side surfaces of the sealing plate) was measured by a spectrophotometer. A result is shown in table 1. Subsequently, the above made wound electrode body was housed in the case main body, and the sealing plate was attached to the case main body such that an opening periphery part of the case main body and the side surface of the sealing plate faced each other.

In example 1, a distance (gap amount) between the side surface of the sealing plate and an inner wall surface of the opening periphery part was adjusted to 0.1 mm. More specifically, a SUS plate was sandwiched between the case main body and the sealing plate to adjust the gap amount. Furthermore, a boundary between the opening periphery part and the sealing plate periphery part is temporarily welded using a high power fiber laser. More specifically, under a condition of oscillator output: 3000 W, welding speed: 150 mm/second, focal length: 0 mm, and angle: +7 deg (83°), laser light is radiated to 16 portions in total. The battery is disassembled after temporary welding, and whether or not the electrode body was damaged was checked. The result is shown in FIG. 1. Note that, as for an "angle (deg)" in table 1, an angle from the center toward the outside of the battery case is indicated by minus (-), and an angle from the outside toward the center of the battery case is indicated by plus (+).

### <Example 2 and Example 3>

Except that the gap amount (mm) and the angle (deg) were respectively changed as shown in table 1, the boundary between the opening periphery part and the sealing plate periphery part was temporarily welded similar to example 1. The result is shown in table 1.

### <Comparative Example 1 to Comparative Example 3>

In comparative example 1 to comparative example 3, the side surfaces of the sealing plates were not colored black. Furthermore, the gap amount (mm) and a radiation angle (deg) were respectively changed as shown in table 1. Except these, the boundary between the opening periphery part and the sealing plate periphery part was temporarily welded similar to example 1. A result is shown in table 1.

### [Table 1]

**Table 1**

| | Gap Amount (mm) | Black Coloring | Light Absorptivity (%) | Radiation Angle (deg) | Damage on Electrode Body |
|---|---|---|---|---|---|
| Example 1 | 0.1 | Yes | 60 | +7 | No |
| Comparative Example 1 | 0.1 | No | 30 | +7 | Yes |
| Example 2 | 0.15 | Yes | 60 | +3.5 | No |
| Comparative Example 2 | 0.15 | No | 30 | +3.5 | Yes |
| Example 3 | 0.1 | Yes | 60 | -1.5 | No |
| Comparative Example 3 | 0.1 | No | 30 | -1.5 | Yes |

As shown in table 1, example 1 to example 3 where the side surfaces of the sealing plate were colored black show that the electrodes were not damaged. This is estimated as that the side surfaces of the sealing plates were colored black, thereby the light absorptivity of lasers used in the welding process became high, and laser light was suitably absorbed.

Although the some embodiment of the present disclosure has been described above, the above embodiment is merely an example. The present disclosure can be carried out in other various modes. The present disclosure can be carried out based on the contents disclosed in this description and a technical knowledge in the field of the present disclosure. The technique recited in the claims cover embodiments obtained by variously modifying and altering the above exemplified embodiment. For example, it is also possible to replace part of the above embodiment with other modification aspects, and it is also possible to add the other modification aspects to the above embodiment. Furthermore, technical features that are not described as indispensable can be also deleted as appropriate.

As described above, specific aspects of the technique disclosed herein include each of following paragraphs.
Item 1: A manufacturing method of a power storage device includes: a preparing step of preparing a bottomed case main body whose one side surface is opened, a sealing plate that seals the opening, and an electrode body that includes a positive electrode and a negative electrode; an assembling step of housing the electrode body inside the case main body, attaching the sealing plate to the opening of the case main body, and assembling the power storage device; and a welding step of radiating laser light to a boundary between the case main body and the sealing plate from a side of an outer surface of the sealing plate, and performing laser welding on the case main body and the sealing plate, and a light absorptivity of a laser used in the welding step is higher in at least part of an area in which an opening periphery part of the case main body and the sealing plate face each other than at an other portion.
Item 2: According to the manufacturing method according to Item 1, the welding step includes a temporary welding step of radiating the laser light to a predetermined portion of the boundary between the case main body and the sealing plate from the side of the outer surface of the sealing plate, and temporarily welding the case main body and the sealing plate, and a main welding step of making the laser light scan along the boundary between the case main body and the sealing plate, and welding entire circumferences of the case main body and the sealing plate, and a light absorptivity of the laser light used in the temporary welding step is higher at the portion that is temporarily welded in the temporary welding step in the area in which the opening periphery part of the case main body and the opening plate face each other than at the other portion.
Item 3: According to the manufacturing method according to Item 1 or 2, at least part of the area in which the opening periphery part of the case main body and the sealing plate face each other is subjected to surface treatment to black such that the light absorptivity for light whose wavelength is 300 nm to 1100 nm is high.
Item 4: A power storage device includes: a bottomed case main body whose one side surface is opened; a sealing plate that is welded to an opening periphery part of the case main body; and an electrode body that is housed inside the case main body, and the power storage device includes a surface treatment part that is treated to black such that a light absorptivity for light whose wavelength is 300 nm to 1100 nm is higher in at least part of an area in which the opening periphery part of the case main body and the sealing plate face each other than at an other portion.
Item 5: In the power storage device according to Item 4, the light absorptivity of the surface treatment part for the light whose wavelength is 300 nm to 1100 nm is 60% or more.
Item 6: In the power storage device according to Item 4 or 5, the case main body and the sealing plate are made of aluminum, and the surface treatment part is formed with an anodic coating.
Item 7: In the power storage device according to any one of Items 4 to 6, the surface treatment part is a black colored layer that contains a black colorant.

## Claims

1. A manufacturing method of a power storage device comprising:
a preparing step of preparing a bottomed case main body (12) whose one side surface is opened, a sealing plate (14) that seals the opening (12h), and an electrode body (20) that includes a positive electrode and a negative electrode;
an assembling step of housing the electrode body (20) inside the case main body (12), attaching the sealing plate (14) to the opening (12h) of the case main body (12), and assembling the power storage device; and
a welding step of radiating laser light to a boundary between the case main body (12) and the sealing plate (14) from a side of an outer surface (14b) of the sealing plate (14), and performing laser welding on the case main body (12) and the sealing plate (14),
wherein a light absorptivity of a laser used in the welding step is higher in at least part of an area in which an opening periphery part (12d) of the case main body (12) and the sealing plate (14) face each other than at an other portion.

2. The manufacturing method according to claim 1, wherein the welding step includes a temporary welding step of radiating the laser light to a predetermined portion of the boundary between the case main body (12) and the sealing plate (14) from the side of the outer surface (14b) of the sealing plate (14), and temporarily welding the case main body (12) and the sealing plate (14), and
a main welding step of making the laser light scan along the boundary between the case main body (12) and the sealing plate (14), and welding entire circumferences of the case main body (12) and the sealing plate (14), and
a light absorptivity of the laser light used in the temporary welding step is higher at the portion temporarily welded in the temporary welding step in the area in which the opening periphery part (12d) and the opening plate (14) face each other than at the other portion.

3. The manufacturing method according to claim 1 or 2, wherein at least part of the area in which the opening periphery part (12d) and the sealing plate (14) face each other is subjected to surface treatment to black such that the light absorptivity for light whose wavelength is 300 nm to 1100 nm is high.

4. A power storage device comprising:
a bottomed case main body (12) whose one side surface is opened;
a sealing plate (14) that is welded to an opening periphery part (12d) of the case main body (12); and
an electrode body (20) that is housed inside the case main body (12),
wherein the power storage device includes a surface treatment part (80) that is treated to black such that a light absorptivity for light whose wavelength is 300 nm to 1100 nm is higher in at least part of an area in which the opening periphery part (12d) of the case main body (12) and the sealing plate (14) face each other than at an other portion.

5. The power storage device according to claim 4, wherein the light absorptivity of the surface treatment part (80) for the light whose wavelength is 300 nm to 1100 nm is 60% or more.

6. The power storage device according to claim 4 or 5, wherein the case main body (12) and the sealing plate (14) are made of aluminum, and the surface treatment part (80) is formed with an anodic coating.

7. The power storage device according to claim 4 or 5, wherein the surface treatment part (80) is a black colored layer that contains a black colorant.
